# EUROPEAN PATENT SPECIFICATION

(11) **EP 1 483 564 B1**
(45) Date of publication and mention of the grant of the patent: **21.02.2007**
(21) Application number: 03744624.2
(22) Date of filing: 10.03.2003
(51) Int. Cl.: G01N 15/14, B07C 5/00

(54) **RIBBON FLOW CYTOMETRY AND CELL SORTING**
BAND-DURCHFLUSSZYTOMETRIE UND ZELLSORTIERUNG
CYTOMETRIE EN FLUX SUR RUBAN ET TRIAGE DE CELLULES

(30) Priority: 14.03.2002 US 364343 P
(43) Date of publication of application: 08.12.2004
(73) Proprietor: Micronics, Inc., Redmond, WA 98053 (US)
(72) Inventor: WEIGL, Bernhard, H., Seattle, WA 98103 (US); BARDELL, Ronald, L., Redmond, WA 98052 (US); HAYENGA, Jon, W., Redmond, WA 98052 (US)
(74) Representative: Grünecker, Kinkeldey, Stockmair & Schwanhäusser Anwaltssozietät
(86) International application number: PCT/US2003/007173
(87) International publication number: WO 2003/078972

(56) References cited:
- WO-A-00/12903
- WO-A-01/49412
- WO-A-02/10713
- WO-A-91/15750
- WO-A-98/10267
- WO-A-99/61888
- DE-A- 10 031 028
- US-A- 4 756 427
- US-A- 5 837 200
- US-B1- 6 332 540

## Description

### FIELD OF THE INVENTION

This invention relates generally to microfluidic devices for performing analytic testing, and, in particular, to a microfluidic device and method for hydrodynamically focusing and sorting cells.

### BACKGROUND OF THE INVENTION

Microfluidic devices are becoming increasingly popular for performing analytical testing. Tools developed by the semiconductor industry for miniaturizing electronics enable fabrication and inexpensive mass production of intricate fluid systems. Microfluidic systems are increasingly utilized in performing a variety of analytical techniques for the acquisition of information in multiple disciplines, including the medical field, life sciences, and drug discovery and development.

There are many different ways to manufacture microfluidic devices, including traditional lithographic techniques, soft lithography, and laminate technologies. In laminate fabrication the device consists of layers of material or lamina that have been cut, such as by a laser or stamped, into the desired shape and then held together with some form of adhesive, most commonly pressure-sensitive or thermally-activated adhesive. Mylar plastic is commonly used, although other materials such as glass and polydimethylsiloxane (PMDS) have also been successfully incorporated into laminate devices. Microfluidic device construction may include a multi-layer laminated structure where each layer has channels and structures fabricated from a laminate material, forming microscale voids or channels where fluids flow. A microscale channel is generally defined as a fluid passage with at least one internal cross-sectional dimension that is less than 500 micrometers and typically between about 0.1 micrometers and about 500 micrometers. Either external pressurized fluid forced into the laminate or structures located within the laminate affect the control and pumping of fluids through these channels.

Under microfluidic conditions, fluids usually flow in a very predictable, laminar fashion, thereby allowing multiple fluids to flow next to each other in the same channel without turbulent mixing or the need for physical separation by a membrane. Smaller particles typically diffuse quickly across the boundary layer, whereas large molecules and particles, such as cells, typically diffuse only minimally.

WO 98/10267 shows a micro flow system for separating particles, comprising a microfabricated member having a flow channel (5) defined therein for guiding a flow of a flulid containing the particles through the flow channel, first inlet means (2) positioned at one end of the flow channel for entering the fluid into the flow channel, first outlet means (7) positioned at the other end of the flow channel for discharging the fluid from the flow channel, the flow of the fluid containing the particles being controlled in such a way that one particle at the time passes a cross section of the flow channel, the member being positioned in a field that is substantially perpendicular to a longitudinal axis of the flow channel so that particles residing in the flow channel and being susceptible to the field across the flow channel are deflected in the direction of the field.

U.S. Patent No. 5,716,852 teaches a method for analyzing the presence and concentration of small particles in a flow cell using laminar flow and diffusion principles, and is incorporated by reference herein in its entirety for all purposes. Described is a channel cell system for detecting the presence of analyte particles in a sample stream using a laminar flow channel having at least two inlet means which provide an indicator stream and a sample stream, where the laminar flow channel has a depth sufficiently small to force laminar flow of the streams and length sufficient for diffusion of particles of the analyte into the indicator stream to form a detection area, and having an outlet out of the channel to form a single mixed stream. This device, which is known as a T-Sensor, may contain an external detecting means for detecting diffusion boundries in the indicator stream. This detecting means may be provided by any means known in the art, including optical means such as optical spectroscopy, or absorption spectroscopy of fluorescence.

Flow cytometry is a method for simultaneously measuring light scatter, fluorescence, and absorption properties of single cells or particles as they flow in fluid suspension. Developed flow cytometric methods allow determination of cellular features such as size, cell membrane permeability, intracellular pH, and the levels of cellular components such as nucleic acids, protein, surface receptor expression, and intracellular calcium levels. Some systems allow sorting or separation of particles or cells according to the properties exhibited. Flow cytometry is increasingly used in basic research as well as in clinical, biological and environmental applications.

Presently, the state of the art in flow cytometry and cell sorting technology uses a hydrodynamically focused core stream, which is focused in two dimensions to roughly the size of a cell in the dimensions orthogonal to flow. This produces a single-file cell stream, which can be presented to a light scatter, fluorescent detector, or image based cell detector system. Cell sorting technology generally combines piezoelectric drop generation and electrostatic deflection. In this manner, cells are partitioned into micro droplets and each micro droplet is charged so that it may be electrostatically deflected into separate bins for sorting. This scheme suffers from the significant limitation that the detectors may only detect and direct one cell at a time. In order to process large quantities of cells, the fluidic-systems must be run in a manner such that fluid passes the detectors at extremely high speeds. Fluid must pass the detector at speeds from one to tens of meters per second in order to achieve necessary throughput for some applications. Because of these limitations, searching for rare cells or particles, such as cancer cells within a liquid preparation, for stem cells, fetal cells, or other can been inefficient, time consuming and costly.

### SUMMARY OF THE INVENTION

The invention provides a microfluidic device according to claim 1 and method for hydrodynamically focusing a sample solution into a ribbon and sorting cells based on a desired feature according to claim 7.

A microfluidic device for sorting cells is provided herein. The device includes an input channel, a primary channel, at least two branch channels which meet with the primary channel at a junction, and a sheath injector positioned upstream from the junction. Sample solution, which may contain a population of cells, can be entered into the input channel and hydrodynamically focused into a sample ribbon. The device also consists of a particle diversion system for directing fluid flow, and particularly the flow of the sample ribbon, into a branch channel based on a detected cell feature.

Furthermore, a method of sorting cells in a microfabricated structure is described. The method consists of hydrodynamically focusing a population of cells into a sample ribbon, flowing the ribbon through a channel, determining the presence or amount of label on each cell, and diverting cells into a particular branch channel based on the presence or amount of label on each cell.

### BRIEF DESCRIPTION OF THE DRAWINGS

FIG. 1 illustrates a side view of a microfluidic device for sorting cells according to the invention;
FIG. 2 shows a three dimensional view of a microfluidic device for sorting cells according to the invention;
FIG. 3 is a side view of the sheath injector of the present invention;
FIG. 4 is a top view of the sheath injector of FIG. 3;

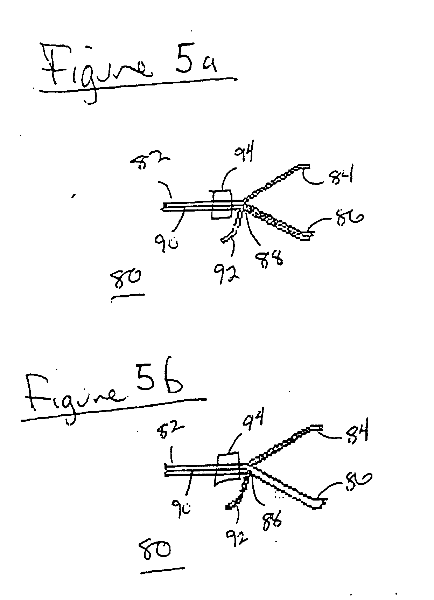

FIGS. 5A and 5B are schematic view of a portion of a sorting unit according to an embodiment of the invention engaged in directing flow of a sample ribbon using fluid displacement;

### DETAILED DESCRIPTION OF THE INVENTION

The term "microfluidic" is generally defined as a substrate having a fluid passage with at least one internal cross-sectional dimension that is less than 500 micrometers and typically between about 0.1 micrometers and about 500 micrometers. The term "channel" as used herein, refers to a microfluidic channel and describes fluid elements dimensioned so that flow therein is substantially laminar. The terms "top", "bottom" and "side" refer to the orientation in the drawings, which is not necessarily the orientation of the members in operation.

As used herein, term "cartridge" refers to a microfluidic device, which is typically, but not necessarily, disposable and which can be coupled with measurement, pumping, electronic, fluidic or other apparatus. The cartridge can be microfabricated using a variety of methods, including without limitation, traditional lithographic techniques, soft lithography, laminate technologies, etc. For example, the cartridge can be microfabricated from any moldable, machinable or etchable substrate. The term machining as used herein includes, without limitation printing, stamping cutting and laser ablating. The cartridge can be formed in a single sheet, in a pair of sheets sandwiched together, or in a plurality of sheets laminated together. The term "sheet" refers to any solid substrate, flexible or otherwise. The channels can be etched in a silicon substrate and covered with a cover sheet, which can be a transparent cover sheet. In a laminated embodiment, the channel walls are defined by removing material from at least one sheet, thus creating channels and voids, and positioning additional sheets on either side of the altered sheets. Any of the layers can contain fluid channels. In some cases the channel is simply a hole (or fluid via) to route the fluid to the next fluid laminate layer. Any two adjacent laminate layers may be bonded together to form a more complex single part.

As used herein, the term "flow" refers to any type of movement of a liquid or solid through a microfluidic device or in a method according to the invention. Under microfluidic conditions fluid flow is characterized by a low Reynolds number and is laminar, with any mixing of adjacent fluids being mainly by diffusion. Flow also includes, without limitation, any fluid stream as well as any material, cells or particles moving with, within, or against the fluid stream. Any type of force may be applied in order to provide a flow, including without limitation, pressure, capillary action, magnetic and electromagnetic force, electrophoresis, dielectrophoresis, electroosmosis, optical tweezers, and any combinations thereof.

The members of the flow system of this invention that are "connected" are fluidically connected. The term "between" refers to the fluidic positioning, which does not necessarily correspond to the geometric positioning.

As used herein, the term "cell" means any cell, virus, material or particle having a microscopic size similar to a biological cell. A biological cell includes without limitation, any prokaryotic, eukaryotic, bacterial, fungal, animal, plant, algae cell or otherwise. The size of a cell typically ranges from about 0.1 to 120 microns in diameter, typically being about 1 to 50 microns in diameter. Cells can be living or dead, charged or uncharged. Cells may be spherical or non-spherical, including without limitation, elongated, flattened, deformed and any other asymmetrical cells. The term "cell" also includes microscopic beads, liposomes, emulsions, cellular components and complexes organelles or any other cell-sized particles.

The term "label" refers to a molecule or composition of molecules that is detectable by optical, spectroscopic, photochemical, biochemical, immunological, chemical or magnetic means. Labels can be specifically targeted to selected cells, but need not be. Such markers or labels include, but are not limited to, colored, radioactive, fluorescent, ultraviolet, or magnetic molecules or particles conjugated to antibodies or other molecules or particles known to bind to cells or cellular components. Antibodies are often used as label components because of their ability to target specific cell types. Other reactive label components that can serve as alternatives to antibodies include, but are not limited to, genetic probes, dyes, fluorochromes, proteins, peptides, amino acids, sugars, polynucleotides, enzymes, coenzymes, cofactors, antibiotics, steroids, hormones or vitamins. The label often generates a measurable signal, which can be detected with or without some kind of stimulatory event and can be used to detect the presence of bound label and possibly quantitate the amount of bound label in a sample. Furthermore, the label may be a detectable intrinsic property of the cell, such as cell size or morphology, which is detectable, for example, by measuring light scattering characteristics. The label may be directly detectable or indirectly detectable or operate in conjunction with another label. For further examples of labels see those listed in Handbook of Fluorescent Probes and Research Chemicals, 9th Ed., Molecular Probes, Inc., Eugene, Oregon.

As used herein, the term "labeling" refers to the process of affixing or conjugating a label to cells, allowing, sometimes after further processing, those cells to be separated from a heterogeneous suspension and/or detected, analyzed or counted in accordance with the present invention.

The terms cell "feature" and cell "characteristic" may be used interchangeably and refer to any property of a cell that is detectable by labeling. Non-limiting examples include size, shape, morphology, presence or amount of a particular cellular molecule (e.g., protein, nucleotide, lipid, carbohydrate, hormone, etc) located internally, on the exterior of the cell, or any combination thereof, expression of a gene or protein, cell permeability, affinity for a dye, cell cycle stage, number of mitotic divisions, or any combination thereof.

A sorting unit permits sorting of cells according to the invention and consists of an input channel, a primary channel, at least two branch channels, a sheath injector, and an interrogation region. A sorting unit further consists of a cell diversion system, which allows the flow of cells to change direction and enter one or more of the branch channels, depending on a signal received in connection with an examination in the interrogation region. An input channel is a channel for receiving sample solution and is connected with the sheath injector. Sample solution is fluid that flows through the input channel and sheath injector, and is hydrodynamically focused in the primary channel. Sample solution typically, but not necessarily, contains a population of cells.

The primary channel permits the flow of cells past the interrogation region and allows for sorting according to the invention. The primary channel consists of a first end connected with a sheath solution reservoir and a second end connected with at least two branch channels that meet at a junction.

A branch channel is a channel that is connected with a primary channel. Typically, a branch channel receives cells depending on the cell feature of interest as detected in the interrogation region and sorted by the cell diversion system. A branch channel may be connected with other channels to permit additional sorting. Alternatively, a branch channel may terminate with a well or reservoir to allow collection or disposal of the cells.

A junction is an area where the primary channel and at least two branch channels join together. It is at the junction where the flow of cells can change direction to enter one or more other channels, e.g., a branch channel, depending on the signal received in connection with an examination in the interrogation region. The interrogation region may be positioned along the primary channel either at, proximate to, or upstream of the junction.

The sheath injector is typically positioned along the primary channel and is connected with an input channel. The sheath injector permits introduction and hydrodynamic focusing of sample solution in the primary channel. The sheath injector according to the invention permits hydrodynamic focusing, for example, in one dimension permitting the production of a sample ribbon.

A sample ribbon is produced, for example, by hydrodynamically focusing sample solution in one dimension. The width of a sample ribbon is typically greater than the height. In one embodiment of the present invention, dimensions of a sample ribbon consists of a formation of cells with a height at least that of a single cell and a width of at least two cells. The ribbon may be at least one cell in length and may extend further depending the amount of cells contained within the sample solution.

The interrogation region is typically located along a portion of the primary channel where cells to be sorted are examined for sorting on the basis of a feature that is predetermined. In an embodiment according to the present invention, a portion of the sample ribbon is examined as it flows through the interrogation region, allowing examination of a plurality of cells at one time. The term plurality refers to a number equal to or greater than two. The predetermined feature is detected or measured, for example, by testing for the presence or amount of a label. For example, the interrogation region can be connected with a recognition apparatus.

The recognition apparatus allows identification, detection, and/or sometimes the quantification of at least one cell feature as determined by a labels or plurality of labels. For example, the recognition apparatus may consist of one or more microscopes, cameras, imagers, diodes, light stimulating devices (e.g. lasers, lamps, etc.), photomultiplier tubes, and processors (e.g. computers and software), and any combinations thereof, which cooperate to detect a signal representative of a cell feature or label, and enable the determination and direction of the sorting of cells into a particular branch channel.

The cell diversion system is a means by which the flow of cells can change direction to enter one or more of the branch channels, depending on a signal received in connection with an examination in the interrogation region. A cell diversion system can employ a variety of sorting techniques to change or direct the flow of cells into a particular branch channel, including without limitation, electric, electroosmotic, valve, magnetic, fluid displacement, pressure, etc.

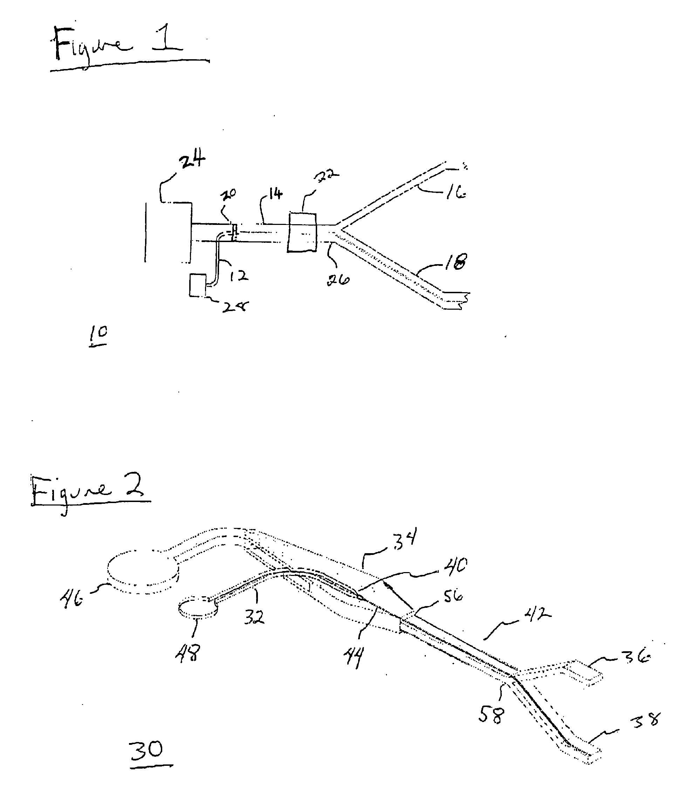

Figure 1 shows a side view of a sorting unit 10, according to an exemplary embodiment of the invention. A sorting unit 10 permits sorting of cells according to the invention and consists of an input channel 12 , a primary channel 14, at least two branch channels16, 18, a sheath injector 20, and an interrogation region 22. The primary channel 14 consists of a first end typically connected with a sheath fluid reservoir 24, which can be located, for example, either within or separate from the same microfabricated substrate containing the primary channel 14. The primary channel 14 further consists of a second end connected with at least two branch channels 16, 18, which connect at a junction 26. An interrogation region 22 is positioned along the primary channel 14 and located between the junction 26 and the sheath injector 20. An input channel 12 is in communication with the primary channel 14 by being connected with the sheath injector 20. The input channel 12 is also connected with a sample fluid reservoir 28. A sorting unit further consists of a cell diversion system (not shown in Figure 1), which is typically located at, near, or proximate the junction. A cell diversion system allows the flow of cells to change direction and enter one or more of the branch channels, depending on a signal received in connection with an examination in the interrogation region.

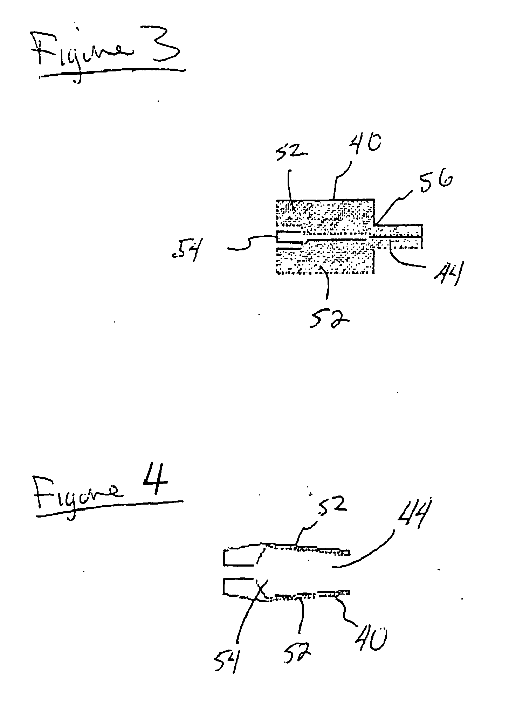

Figure 2 illustrates a three dimensional view of a sorting unit 30, according to another exemplary embodiment of the invention. Sorting unit 30 of Figure 2 consists of an input channel 32, a primary channel 34, at least two branch channels 36, 38, a sheath injector 40, and an interrogation region 42. In order to illustrate the operation of sorting unit 30, a ribbon 44 is shown with sorting unit 30 in Figure 2. Sheath solution can be entered into a sheath fluid reservoir 46 and flowed through the sorting unit 30, including through the primary channel 34. Sample solution can be entered into the sample reservoir 48 and can flow through the input channel 32 and into the primary channel 34. Sheath solution can enter the primary channel 34 through the sheath injector 40. At the sheath injector 40, the sample solution 54 is surrounded by sheath solution 52 and focused into a sample ribbon 44, as can be seen in FIGS. 3 and 4. The sheath solution 52 forms two high pressure streams above and below the sample solution 54, which is flowing at a lower pressure, and a sample ribbon 44 is formed. The sample ribbon 44 can be further focused geometrically at an entrance 56 to a narrower portion of the primary channel 34. The sample ribbon 44 flows through the primary channel 34, past the interrogation region 42 and to the junction 58. Near to the junction 58, a cell diversion system allows the flow of cells to change direction and enter one or more of the branch channels 36, 38, depending on a signal received in connection with an examination in the interrogation region 42.

In another example of an embodiment of the present invention, other means of differentially restricting flow between two or more branch channels can be employed. For example, U.S. patent No. 5,726,404, assigned to Micronics, Inc. describes valveless liquid microswitches and teaches a valveless method and apparatus for high speed switching of liquid flow between intersecting microchannels. By manipulating the pressures, fluid flow can be differentially restricted in the absence of valves to allow the direction of the sample ribbon into one or more branch channels 64, 66.

Another exemplary embodiment of the invention including a cell diversion system is illustrated in FIGS. 6A and 6B. Shown is at least a portion of a sorting unit 80, including a portion of a primary channel 82 and a plurality of branch channels 84, 86, which connect at a junction 88. In this embodiment, a sample ribbon 90 may be directed into one or more branch channels 84, 86 by means of fluid displacement. Shown here, a channel 92 is connected with the primary channel 82 between the junction 88 and the interrogation region 94, with the channel 92 allowing fluid to enter the primary channel 82 upstream from the junction 88. Fluid can flow from the primary channel 82 and through the junction 88. Initially, no fluid enters the primary channel 82 from the channel 92, and due to the geometric positioning of the primary channel 82 and branch channels 84, 86, a portion of the fluid, including the sample ribbon 90 flows into the bottom branch channel 86. When a desired label is detected in the interrogation region 94, fluid can be entered into the primary channel 82 from the channel 92. The entering fluid partially displaces fluid flowing through the primary channel 82, and causes the sample ribbon 90 to be directed into the top branch channel 84.

Alternatively, in another example, the sample ribbon 90 may be directed into a branch channel by negative fluid displacement where fluid is removed from the primary channel 82 by channel 92. In this example, removal of fluid from the primary channel 82 by fluid flowing into channel 92 decreases the volume of fluid in the primary channel 82 and directs the sample ribbon 90 into the bottom branch channel 86. When the removal of fluid from the primary channel 82 by channel 92 is interrupted, the volume of fluid in the primary channel 82 increases and the sample ribbon 90 is directed into the top branch channel 84.

Other embodiments of the invention including a cell diversion system can employ a variety of sorting techniques to change or direct the flow of cells into a particular branch channel, including other means of fluid displacement, pressure, etc.

While the sorting device described above utilizes a Y-shaped junction, this is not necessarily required. Other types of junctions, including without limitation, T-shaped junctions or junctions formed by the intersection of more than 4 channels could be utilized for sorting according to the invention.

Additionally, while only a single sorting unit is illustrated in the above figures, the invention is not limited to this single configuration. A sorting unit according to the embodiments of the present invention is readily integratable with other structures on the same microfabricated substrate. For example, embodiments according to the present invention may include a series of consecutively arranged sorting units useful for segregating different cells in a population through successive sorting operations. Another embodiment according to the present invention may include a cartridge microfabricated to include one or more sorting units, or a series of consecutively arranged sorting units.

Other arrangements, configurations and methods should be readily apparent to a person of ordinary skill in the art. Other embodiments, combinations and modifications of this invention will occur readily to those of ordinary skill in the art in view of these teachings. Therefore, this invention is to be limited only by the following claims, which include all such embodiments and modifications when viewed in conjunction with the above specification and accompanying drawings.

## Claims

1. A microfluidic device for sorting cells, comprising:
a. an input channel (12) for receiving sample solution;
b. a primary channel (14, 34, 82), with a first end of the primary channel connected with a sheath solution reservoir (24, 46) and a second end connected with at least two branch channels (16, 18, 36, 38, 84, 86) which connect at a junction (26, 58, 88);
c. a sheath injector (20, 40) positioned upstream from the junction (26, 58, 88) and connected with the input channel (12, 32) such that sample solution entering the primary channel (14, 34, 82) flows through the sheath injector (20, 40) and is hydrodynamically focused into a ribbon (44, 90) compressed between at least two layers of sheath solution;
d. an interrogation region (22, 42, 94) positioned between the junction (26, 58, 88) and the sheath injector (20, 40), where the interrogation region is coupled with a recognition apparatus for evaluating cells in the ribbon (44, 90) according to at least one cell feature as the ribbon passes through the interrogation region; and
e. a cell diversion system responsive to the recognition apparatus and capable of directing the ribbon (44, 90) into a branch channel (16, 18, 36, 38, 84, 86) based on an evaluated feature, **characterised in that** the cell diversion system comprises a separate channel (92) for directing the sample ribbon (44, 90), said sample ribbon being directed by means of fluid displacement from or into this channel (92).

2. The microfluidic device of claim 1, wherein the cell diversion system consists of a channel (92) for introducing fluid, said channel being positioned upstream from the junction (88), with introduction of fluid from said channel being determined through communication with the recognition apparatus.

3. The microfluidic device of claim 1, wherein the cell diversion system consists of a channel (92) for removing fluid from the primary channel, said channel being positioned upstream from the junction (88), with introduction of fluid from said channel being determined through communication with the recognition apparatus.

4. The microfluidic device of at least one of the preceding claims, further comprising a means for geometrically focusing the ribbon (44, 90).

5. The microfluidic device of at least one of the preceding claims, wherein each evaluated cell feature is made detectable by use of a label.

6. The microfluidic device of at least one of the preceding claims, where labelled cells emit a fluorescent signal, which is detected by the recognition apparatus consisting of an optical detection means.

7. A method of sorting cells in a microfluidic device, comprising the steps of:
a. hydrodynamically focusing a population of cells into a sample ribbon (44, 90) compressed between at least two layers of sheath solution;
b. flowing the sample ribbon (44, 90) through a primary channel (14, 34, 82) comprising an interrogation region (22, 42, 94);
c. determining the presence or amount of label on each cell as it passes through the interrogation region; and
d. diverting cells into a first branch (16, 36, 84) channel or a second branch (18, 38, 86) channel at a junction (26, 58, 88) based on the presence or amount of label on each cell, **characterised in that** the cells are diverted by fluid displacement, the fluid being displaced from or into a separate channel (92) connected to the primary channel (14, 34, 82).

8. The method of claim 7, further comprising the step of geometrically focusing the ribbon upstream from the interrogation region.

9. The method of claim 7, wherein the cell diverting step includes positioning a channel (92) for introducing fluid upstream from the junction (26, 58, 88), with introduction of fluid from said channel (92) being determined through communication with the recognition apparatus.

10. The method of claim 7, wherein the cell diverting step includes positioning a channel (92) for removing fluid from the primary channel (14, 34, 82) upstream from the junction (26, 58, 88), with introduction of fluid from said channel (92) being determined through communication with the recognition apparatus.

## Patentansprüche

1. Mikrofluidisches Gerät zum Sortieren von Zellen mit:
a. einem Eingangskanal (12) zum Aufnahmen einer Probenlösung;
b. einem Primärkanal (14, 34, 82), wobei ein erstes Ende des Primärkanals mit einem Behälter (24, 46) für eine Trägerlösung verbunden ist und ein zweites Ende mit wenigstens zwei Zweigkanälen (16, 18, 36, 38, 84, 86) verbunden ist, welche an einer Verzweigungsstelle (26, 58, 88) miteinander verbunden sind;
c. einer Trägerlösungsdüse (20, 40), welche stromaufwärts von der Verzweigungsstelle (26, 58, 88) angeordnet ist und derart mit dem Eingangskanal (12, 32) verbunden, dass Probenlösung, die in den Primärkanal (14, 34, 82) eindringt, durch die Trägerlösungsdüse (20, 40) fließt und hydrodynamisch zu einem Band (44, 90) fokussiert wird, welches zwischen mindestens zwei Schichten einer Trägerlösung komprimiert ist;
d. einem Prüfbereich (22, 42, 94), welcher zwischen der Verzweigungsstelle (26, 58, 88) und der Trägerlösungsdüse (20, 40) angeordnet ist, wobei der Prüfbereich mit einer Auswertevorrichtung verbunden ist, um Zellen in dem Band (44, 90) gemäß mindestens eines Zellmerkmals auszuwerten, während das Band den Prüfbereich passiert; und
e. einem Zellumlenkungssystem, das auf die Auswertevorrichtung reagiert und fähig ist, das Band (44, 90), basierend auf dem ausgewerteten Merkmal in einen Zweigkanal (16, 18, 36, 38, 84, 86) zu lenken, **dadurch gekennzeichnet, dass** das Zellumlenkungssystem einen separaten Kanal (92) aufweist, um das Probenband (44, 90) zu lenken, wobei das Probenband durch Flüssigkeitsverdrängung aus oder in diesen Kanal (92) gelenkt wird.

2. Mikroftuidisches Gerät nach Anspruch 1, wobei das Zellumlenkungssystem einen Kanal (92) zum Einspeisen von Flüssigkeit aufweist, wobei der besagte Kanal stromaufwärts von der Verzweigungsstelle (88) angeordnet ist, und das Einspeisen von Flüssigkeit aus dem Kanal durch Kommunikation mit der Auswertevorrichtung bestimmt wird.

3. Mikrofluidisches Gerät nach Anspruch 1, wobei das Zellumlenkungssystem einen Kanal (92) zur Entnahme von Flüssigkeit aus dem Primärkanal aufweist, wobei der besagte Kanal stromaufwärts von der Verzweigungsstelle (88) angeordnet ist und das Einspeisen von Flüssigkeit aus dem Kanal durch Kommunikation mit der Auswertevorrichtung bestimmt wird.

4. Mikrofluidisches Gerät nach wenigstens einem der vorhergehenden Ansprüche, welches zusätzlich ein Mittel zum geometrischen lenken des Bands (44, 90) aufweist.

5. Mikrofluidisches Gerät nach wenigstens einem der vorhergehenden Ansprüche, wobei jedes ausgewertete Zellmerkmal durch Einsatz einer Markierung nachweisbar gemacht wird.

6. Mikrofluidisches Gerät nach wenigstens einem der vorhergehenden Ansprüche, wobei markierte Zellen ein fluoreszierendes Signal aussenden, welches von der Auswertevorrichtung, die ein optisches Erkennungsgerät aufweist, erfasst wird.

7. Methode zum Sortieren von Zellen in einem mikrofluidischen Gerät mit folgenden Schritten:
a. hydrodynamisches Fokussieren einer Zellpopulation in ein Probenband (44, 90), welches zwischen wenigstens zwei Schichten einer Trägerzlösung komprimiert ist;
b. Fließen des Probenbands (44, 90) durch einen Primärkanal (14, 34, 82) mit einem Prüfbereich (22, 42, 94);
c. Ermitteln der Anwesenheit oder Menge einer Markierung auf jeder Zelle während sie den Prüfbereich passiert; und
d. Umlenken der Zellen an der Verzweigungsstelle (26, 58, 88) in einen ersten Zweigkanal (16, 36, 84) oder einen zweiten Zweigkanal (18, 38, 86) basierend auf der Anwesenheit oder Menge einer Markierung auf jeder Zelle, **dadurch gekennzeichnet, dass** die Zellen durch Flüssigkeitsverdrängung umgelenkt werden, wobei die Flüssigkeit aus oder in den separaten Kanal (92), welcher mit dem Primärkanal (14, 34, 82) verbunden ist, verdrängt wird.

8. Methode nach Anspruch 7, die zusätzlich den Schritt aufweist, das Band stromaufwärts des Prüfbereichs geometrisch zu fokussieren.

9. Methode nach Anspruch 7, wobei der Schritt des Umlenkens der Zellen das Anordnen eines Kanals (92) beinhaltet, um Flüssigkeit stromaufwärts der Verzweigungsstelle (26, 58, 88) einzuspeisen, wobei das Einspeisen von Flüssigkeit aus dem Kanal (92) durch Kommunikation mit der Auswertevorrichtung bestimmt wird.

10. Methode nach Anspruch 7, wobei der Schritt des Umlenkens der Zellen das Anordnen eines Kanals (92) beinhaltet, um dem Primärkanal (14, 34, 82) stromaufwärts der Verzweigungsstelle (26, 58, 88) Flüssigkeit zu entnehmen, wobei das Einspeisen von Flüssigkeit aus dem Kanal (92) durch Kommunikation mit der Auswertevorrichtung bestimmt wird.

## Revendications

1. Un appareil à micro fluide de trie cellulaire, comportant :
a. un canal d'introduction (12) recevant la solution échantillon ;
b. un canal primaire (14, 34, 82), dont une première terminaison est connectée à la gaine d'un réservoir de solution (24, 46) et la deuxième terminaison est connectée avec au moins deux canaux ramifiés (16, 18, 36, 38, 84, 86) formant un embranchement (26, 58, 88) ;
c. un injecteur à gaine (20, 40) positionné en amont de l'embranchement (26, 58, 88) et connecté au canal d'admission (12, 32) afin que la solution échantillon arrivant par le canal primaire (14, 34, 82) s'écoule au travers de l'injecteur à gaine (20, 40) et par un système hydrodynamique soit confluée sous la forme d'un ruban (44, 90) comprimé entre au moins deux couches d'une solution gaine ;
d. une région d'interrogation (22, 42, 94) disposée entre l'embranchement (26, 58, 88) et l'injecteur à gaine (20, 40), où la région d'interrogation est couplée avec un appareil de reconnaissance pour évaluer les cellules présentes à l'intérieur du ruban (44, 90) selon au moins une caractéristique cellulaire lorsque le ruban traverse la région d'interrogation ; et
e. un système de déviation cellulaire en lien avec l'appareil de reconnaissance et capable de diriger le ruban (44, 90) à l'intérieur d'une branche d'un canal (16, 18, 36, 38, 84, 86) selon la particularité évaluée, **caractérisé** dans le fait que ce système de déviation cellulaire comprend un canal séparé (92) afin de diriger le ruban échantillon (44, 90), ce ruban échantillon étant dirigé par des moyens de déplacement de fluides, depuis ou à l'intérieur de ce canal (92).

2. Cet appareil à micro fluide selon la revendication 1, dans lequel le système de dérivation cellulaire consiste en un canal (92) permettant l'introduction du fluide, ce canal étant positionné en amont de l'embranchement (88), et dont l'introduction du fluide à partir de ce canal est déterminé par une communication avec l'appareil de reconnaissance.

3. L'appareil à micro fluide selon la revendication 1, dans lequel le système de dérivation cellulaire consiste en un canal (92) permettant l'évacuation du fluide du canal primaire, ce canal étant positionné en amont de l'embranchement (88), et dont l'introduction du fluide à partir de ce canal est déterminée par une communication avec l'appareil de reconnaissance.

4. L'appareil à micro fluide selon au moins une des revendications précédentes, comportant en plus un moyen pour diriger le ruban de façon géométrique (44, 90).

5. L'appareil à micro fluide selon au moins une des revendications précédentes, dans lequel chaque caractéristique cellulaire évaluée est rendue détectable par l'utilisation d'une marque.

6. L'appareil à micro fluide selon au moins une des revendications précédentes, ou les cellules marquées émettent un signal fluorescent, lequel est détecté par l'appareil de reconnaissance consistant en des moyens de détections optiques.

7. Une méthode pour trier les cellules dans un appareil à micro fluide, comprenant les étapes de :
a. direction hydrodynamique d'une population de cellules dans un ruban échantillon (44, 90) comprimé entre au moins deux couches de solution gaine ;
b. injection du ruban échantillon (44, 90) au travers du canal primaire (14, 34, 82) comportant la région d'interrogation (22, 42, 94) ;
c. détermination de la présence ou d'une quantité de marquage sur chaque cellule lors de son passage au travers de la région d'interrogation ; et
d. déviation des cellules dans la première branche (16, 36, 84) du canal ou la seconde branche (18, 38, 86) du canal au niveau d'un embranchement (26, 58, 88) selon la présence de marquage ou selon une quantité de marquage sur chaque cellule, avec la caractéristique que les cellules sont déviées par déplacement de fluide, ce fluide étant déplacé depuis ou à l'intérieur d'un canal individualisé (92) connecté au canal primaire (14, 34, 82).

8. Une méthode selon la revendication 7, comprenant en plus l'étape de direction géométrique du ruban en amont de la région d'interrogation.

9. Une méthode selon la revendication 7, dans laquelle l'étape de déviation des cellules comporte le positionnement d'un canal (92) pour l'introduction du fluide en amont de la jonction (26, 58, 88), avec l'introduction d'un fluide dudit canal (92) qui est déterminée au travers d'une communication avec l'appareil de reconnaissance.

10. Une méthode selon la revendication 7, dans laquelle l'étape de déviation des cellules comporte le positionnement d'un canal (92) pour l'élimination du fluide du canal primaire (14, 34, 82) en amont de la jonction (26, 58, 88), avec l'introduction d'un fluide dudit canal (92) qui est déterminée au travers d'une communication avec l'appareil de reconnaissance.
